# FASCICULE DE BREVET EUROPEEN

(11) **EP 1 281 549 B1**
(45) Date de publication et mention de la délivrance du brevet: **19.09.2007**
(21) Numéro de dépôt: 02291738.9
(22) Date de dépôt: 10.07.2002
(51) Int. Cl.: B60J 7/047, B60J 7/04

(54) **Dispositif de commande du déplacement d'éléments mobiles d'une partie couvrante d'un habitacle de véhicules automobiles**
Steuervorrichtung zur Verstellung von bewegbaren Elementen eines Abdeckteils für einen Innenraum von Kraftfahrzeugen
Control device for displacing movable parts of a covering element for vehicle passenger compartment

(30) Priorité: 30.07.2001 FR 0110196
(43) Date de publication de la demande: 05.02.2003
(73) Titulaire: Peugeot Citroen Automobiles SA, 92200 Neuilly sur Seine (FR)
(72) Inventeur: Mezza, Louis, 95430 Auvers sur Oise (FR); Poirier, Jean-Christophe, 92300 Levallois-Perret (FR)
(74) Mandataire: Lanceplaine, Jean-Claude

(56) Documents cités:
- GB-A- 444 152
- GB-A- 573 355

## Description

La présente invention concerne un dispositif de commande du déplacement d'éléments mobiles d'une partie couvrante d'un habitacle de véhicule automobile.

On connaît des véhicules automobiles dont la partie supérieure de l'habitacle, c'est à dire la partie couvrante, est pourvue d'un élément mobile formant un toit ouvrant qui est monté déplaçable entre une position fermée et une position ouverte par l'intermédiaire d'un moteur électrique à double sens de rotation dont l'arbre de sortie est relié à une tringlerie de manoeuvre du toit, sous le contrôle de moyens de commande actionnés par l'utilisateur.

Cet élément mobile permet de découvrir une surface limitée de la partie couvrante de l'habitacle du véhicule automobile.

La tendance des constructeurs de véhicules est d'offrir à leur clientèle des véhicules de loisirs polyvalents permettant de transformer l'habitacle en fonction de l'utilisation et notamment des véhicules comportant une large surface découvrable de la partie supérieure du véhicule automobile.

Pour cela, on connaît des véhicules qui comportent deux éléments mobiles indépendants déplaçables chacun entre une position fermée et une position ouverte par l'intermédiaire d'un moteur électrique à double sens de rotation dont l'arbre de sortie est relié à une tringlerie de manoeuvre de l'élément mobile correspondant.

Le principal inconvénient d'une telle disposition réside dans le montage de moyens de commande et de manoeuvre pour chaque élément mobile ce qui augmente de manière importante le coût.

On connaît également des véhicules automobiles dont la partie couvrante est composée de lames parallèles montées de façon coulissante et pivotante le long de deux bords opposés de l'ouverture du pavillon du véhicule.

Mais, dans ce cas, le mécanisme permettant de commander simultanément le pivotement et le coulissement des lames vers une position où elles se chevauchent et découvrent l'ouverture du pavillon du véhicule automobile est généralement complexe et onéreux.

On connaît dans le document GB-A-573 355 un dispositif de commande du déplacement d'éléments mobiles d'une partie couvrante d'un habitacle d'un véhicule. Ces éléments mobiles sont au nombre de trois et ils sont déplaçables par coulissement entre une position déployée dans laquelle ils sont alignés et jointifs et une position escamotée dans laquelle ils sont placés les uns au-dessus des autres.

L'invention a pour but de proposer un dispositif de commande des déplacements d'éléments mobiles d'une partie couvrante d'un habitacle de véhicule automobile qui permet d'éliminer les inconvénients précédemment mentionnés.

L'invention a donc pour objet un dispositif de commande du déplacement d'éléments mobiles d'une partie couvrante d'un habitacle de véhicule automobile, ladite partie couvrant comprenant successivement un élément fixe, un premier et un second éléments mobiles entre une position déployée et une position escamotée, caractérisé en ce qu'il comprend :
- au moins un moyen de guidage du premier élément mobile, et au moins un moyen de guidage du second élément mobile formé par une piste de roulement d'un galet arrière monté sur chaque bord latéral arrière de ce second élément mobile par une pièce de liaison et par un rail intermédiaire de roulement d'un galet avant monté sur chaque bord latéral avant dudit second élément,
- des moyens de déplacement par coulissement des éléments mobiles, d'une part, entre la position déployée dans laquelle les éléments mobiles sont alignés et jointifs, une position intermédiaire dans laquelle les éléments mobiles sont superposés et la position escamotée dans laquelle lesdits éléments mobiles sont superposés avec l'élément fixe et, d'autre part, entre les positions escamotée et déployée, et
- des moyens de verrouillage et de déverrouillage de chaque élément mobile dans la position déployée.

Selon d'autres caractéristiques de l'invention :
- les moyens de déplacement du premier élément mobile comprennent, d'une part, des moyens de déplacement entre les positions déployée et escamotée de ce premier élément mobile et, d'autre part, des moyens de déplacement entre les positions escamotée et déployée dudit premier élément mobile, lesdits moyens étant portés par le second élément mobile,
- ledit moyen de guidage du premier élément mobile est formé par un rail supérieur de roulement de deux galets montés respectivement sur le bord latéral arrière et le bord latéral avant dudit premier élément,
- les moyens de déplacement du second élément mobile sont formés par deux câbles filetés ayant chacun une extrémité solidaire de l'axe de montage de l'un des galets de l'extrémité arrière du second élément mobile, chaque câble fileté engrenant avec une roue dentée entraînée en rotation par un moteur électrique,
- chaque câble fileté est déplaçable en translation par rotation de la roue dentée d'entraînement moteur dans une gorge longitudinale ménagée dans chaque profilé et s'étendant le long du chemin de roulement correspondant,
- les moyens de déplacement du premier élément mobile entre les position déployée et escamotée sont formés par un joint d'étanchéité monté sur le bord transversal arrière du second élément mobile et comportant une partie en saillie formant butée contre le bord transversal arrière du premier élément dans la position superposée des éléments mobiles,
- les moyens de déplacement du premier élément mobile entre les positions escamotée et déployée comprennent un crochet pivotant monté sur un support fixé sur chaque bord latéral avant du second élément mobile et destiné à coopérer avec un organe d'accrochage monté sur chaque bord latéral arrière du premier élément mobile et comportant une encoche de blocage dudit crochet lors du déplacement du premier élément par le second élément mobile vers la position déployée,
- les moyens de verrouillage et de déverrouillage du premier élément mobile comprennent, pour chaque galet avant dudit premier élément, un loquet pivotant par des organes de commande entre une première position escamotée libérant l'extrémité arrière du rail supérieur, une deuxième position en saillie dans ce rail supérieur derrière le galet arrière pour bloquer ce galet dans ladite extrémité arrière et une troisième position devant le galet pour le repousser vers l'extrémité avant dudit rail supérieur,
- les moyens de verrouillage et de déverrouillage du second élément mobile comprennent, pour chaque galet avant dudit second élément, un crochet pivotant par des organes de commande entre une première position escamotée libérant le second tronçon de l'extrémité arrière du rail intermédiaire et une seconde position en saillie dans ce second tronçon pour bloquer ce galet dans ladite extrémité arrière.

L'invention a également pour objet un véhicule automobile, caractérisé en ce qu'il est équipé d'un dispositif de commande du déplacement d'éléments mobiles d'une partie couvrante de l'habitacle tel que précédemment mentionné.

D'autres caractéristiques et avantage de l'invention apparaîtront au cours de la description qui va suivre, donnée à titre d'exemple et faite en référence aux dessins annexés, sur lesquels :
- La Fig. 1 est une vue schématique en perspective d'un véhicule automobile équipé d'un dispositif de commande du déplacement mobile d'une partie couvrante de l'habitacle,
- les Figs. 2 et 3 sont des vues schématiques en coupe longitudinale montrant les positions des éléments mobiles respectivement en position partiellement escamotée et en position totalement escamotée,
- la Fig. 4 est une vue schématique en élévation d'un profilé de guidage des éléments mobiles,
- la Fig. 5 est une vue en coupe selon la ligne 5-5 de la Fig. 4,
- la Fig. 6 est une vue schématique partielle et en élévation des galets de guidage des éléments mobiles,
- la Fig. 7 est une vue schématique de dessus montrant les moyens de déplacement du second élément mobile,
- la Fig. 8 est une vue schématique en coupe transversale des éléments mobiles montrant les moyens de déplacement du premier élément par le second élément entre les positions déployée et escamotée,
- les Figs. 9 à 11 sont des vues schématiques partielles et en perspective des éléments mobiles et montrant les moyens d'entraînement du premier élément par le second élément entre les positions escamotée et déployée,
- la Fig. 12 est une vue schématique en perspective des moyens de verrouillage et de déverrouillage des éléments mobiles dans la position déployée,
- la Fig. 13 est une vue schématique en perspective des organes de commande des moyens de verrouillage et de déverrouillage des éléments mobiles en position déployée,
- les Figs. 14 à 28 sont des vues schématiques en perspective montrant les différentes phases du déplacement des éléments mobiles dans les positions escamotée et déployée et inversement.

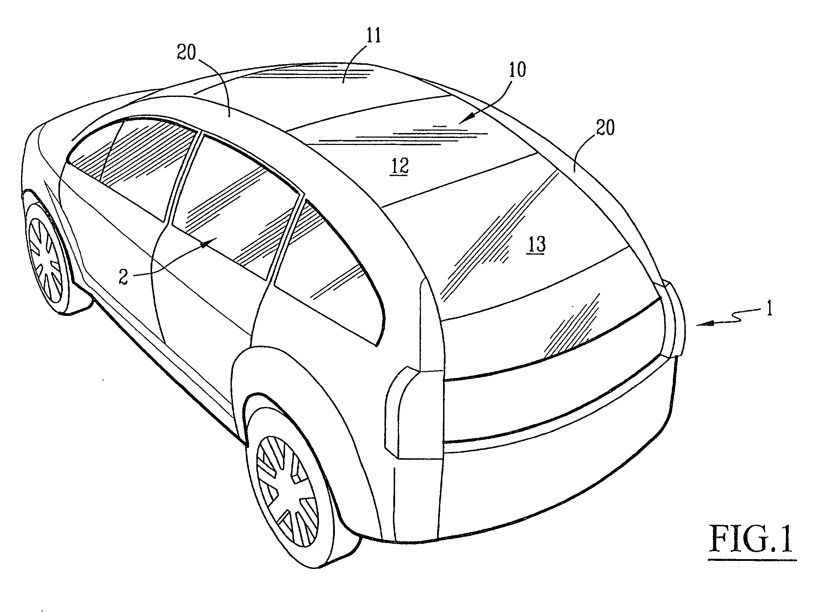

Sur la Fig. 1, on a représenté schématiquement un véhicule automobile désigné par la référence générale 1 et qui comporte une carrosserie délimitant un habitacle 2 contenant un poste de conduite.

Cet habitacle 2 est délimité en partie supérieure par une partie couvrante 10 comprenant, dans l'exemple de réalisation représenté sur les figures et de l'avant jusqu'à l'arrière du véhicule, successivement un élément fixe 11, un premier élément mobile 12 et un second élément mobile 13.

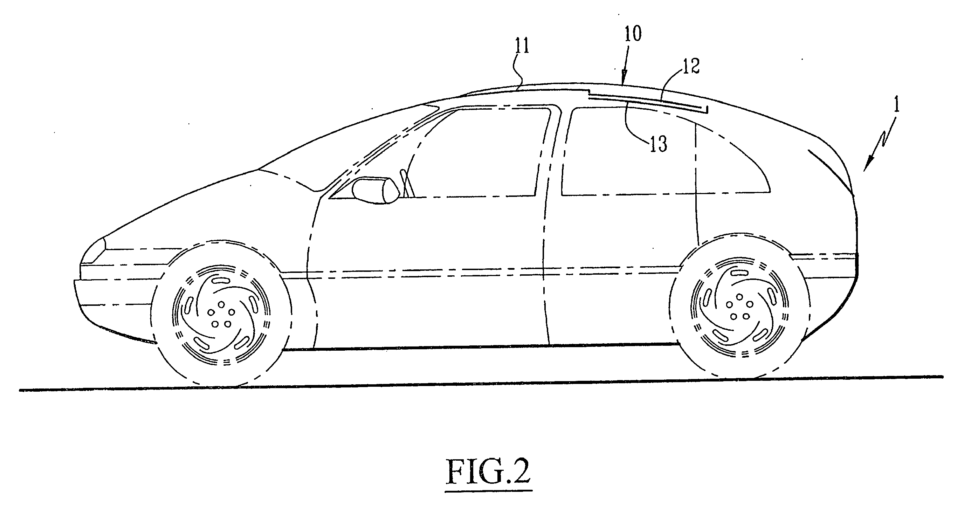

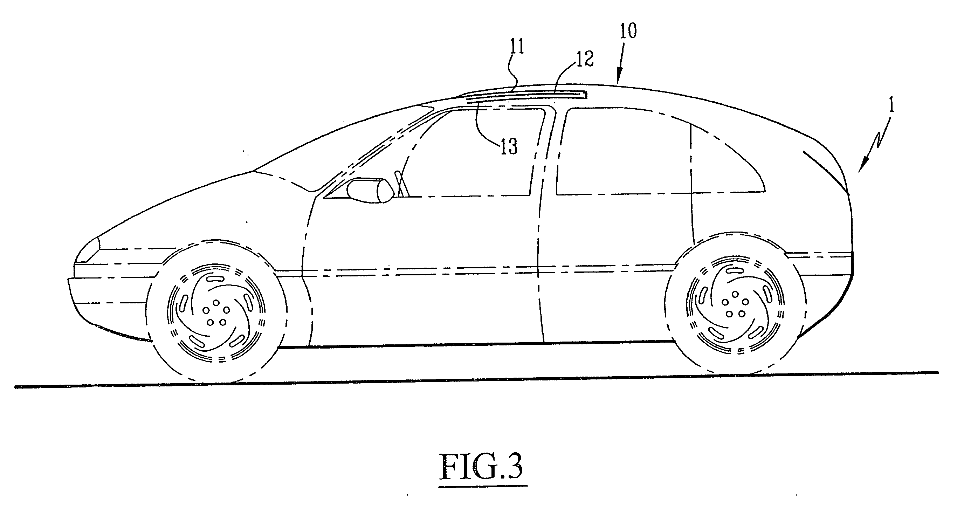

Les éléments mobiles 12 et 13 sont déplaçables par coulissement entre une position déployée représentée à la Fig. 1 et dans laquelle ils recouvrent l'habitacle 2, une position intermédiaire représentée à la Fig. 2 et dans laquelle le second élément mobile 13 est disposé au-dessous du premier élément mobile 12 découvrant ainsi l'arrière de la partie couvrante 10 de l'habitacle et une position escamotée représentée à la Fig. 3 et dans laquelle les éléments mobiles 12 et 13 sont disposés l'un au-dessous de l'autre et au-dessous de l'élément fixe 11 permettant de découvrir l'habitacle 2.

D'une manière générale, le dispositif de commande du déplacement des éléments mobiles 12 et 13 comprend :
- des moyens de guidage de chaque élément mobile 12 ou 13,
- des moyens de déplacement par coulissement du second élément mobile 13, d'une part, entre la position déployée dans laquelle les éléments mobiles 12 et 13 sont alignés et jointifs et la position escamotée dans laquelle lesdits éléments mobiles sont superposés et, d'autre part, entre les positions escamotée et déployée,
- des moyens de déplacement par coulissement du premier élément mobile 12 entre les position déployée et escamotée, lesdits moyens étant portés par le second élément mobile 13,
- des moyens de déplacement par coulissement du premier élément mobile 12 entre les positions escamotée et déployée, lesdits moyens étant portés par le second élément mobile 13, et
- des moyens de verrouillage et de déverrouillage de chaque élément mobile 12 ou 13 dans la position déployée.

Dans ce qui suit et dans un but de simplification, les organes de chaque pièce les plus proches de l'avant du véhicule seront suivis de l'adjectif avant et les organes de chaque pièce les plus proches de la partie arrière du véhicule seront suivis de l'adjectif arrière.

De plus, les éléments mobiles 12 et 13 sont, dans l'exemple de réalisation représenté sur les figures, déplaçables de l'arrière vers l'avant du véhicule.

Selon une variante, ils peuvent être déplaçables de l'avant vers l'arrière de ce véhicule automobile.

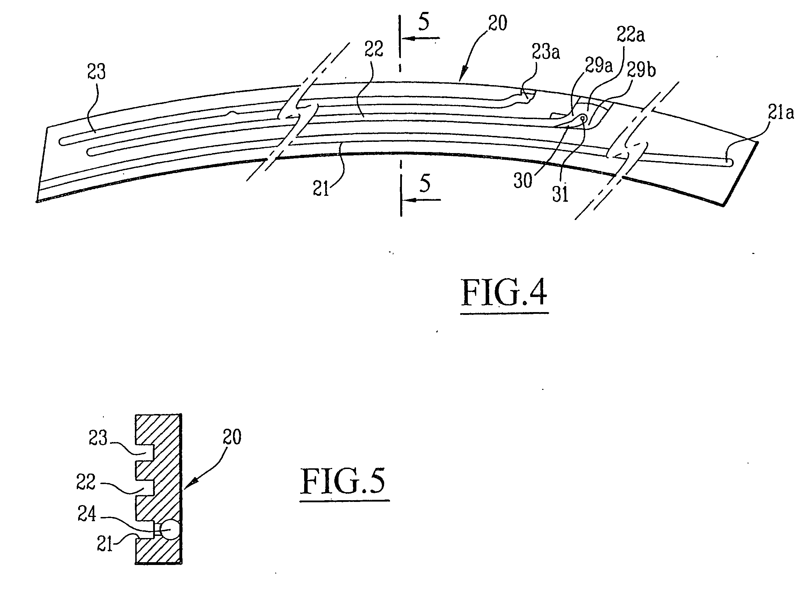

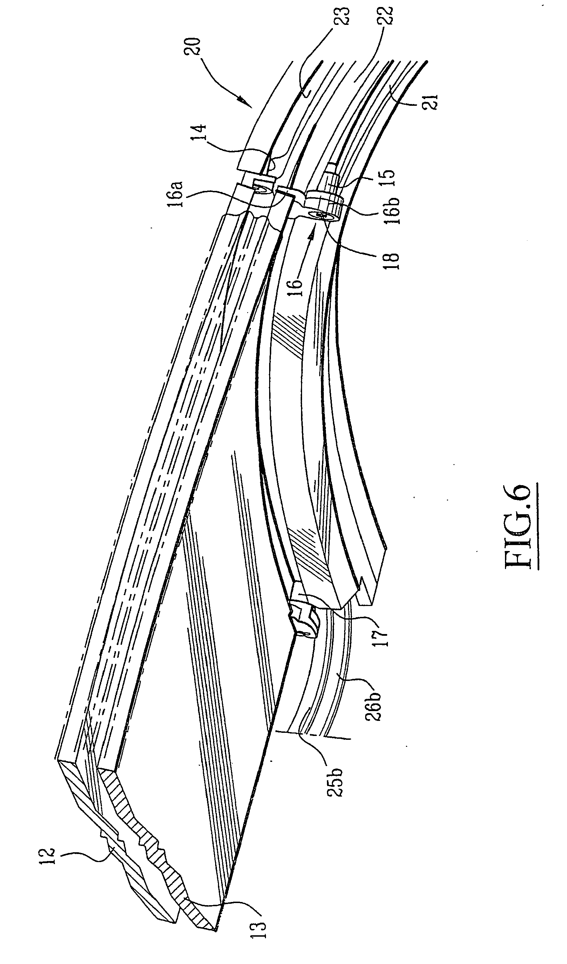

Les moyens de guidage des éléments mobiles 12 et 13 représentés sur les Figs. 4 et 5 sont formés par deux profilés 20 longitudinaux et parallèles, fixés chacun sur un montant latéral de la partie couvrante 10 de l'habitacle 2.

Chaque profilé 20 comporte, du bas vers le haut, une piste de roulement 21, un rail intermédiaire 22 et un rail supérieur 23.

Les extrémités arrière 22a et 23a respectivement du rail intermédiaire 22 et du rail supérieur 23 sont situées sensiblement à la même distance de la piste de roulement 21 de façon à aligner les éléments mobiles 12 et 13 dans la position déployée, comme on le verra ultérieurement.

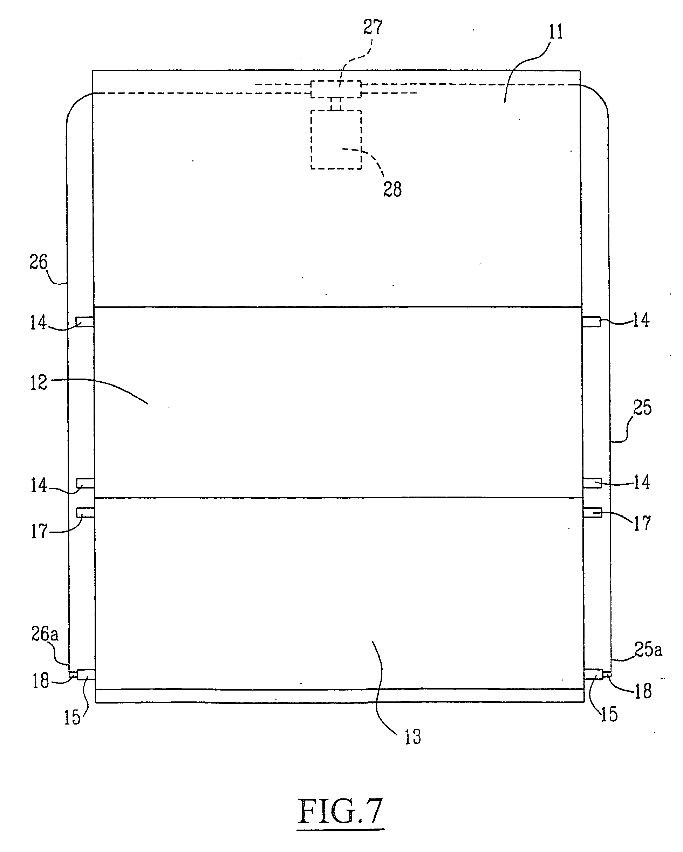

Comme représenté aux Figs. 6 et 7, le premier élément mobile 12 comporte, sur chacun de ses bords latéraux arrière et avant, un galet 14 de roulement dans le rail supérieur 23.

Le second élément mobile 13 comporte, sur chacun de ses bords latéraux arrière, un galet arrière 15 fixé sur ledit second élément 13 par l'intermédiaire d'une pièce de liaison 16 et coopérant avec la piste de roulement 21.

De plus, le second élément 13 comporte, sur chacun de ses bords latéraux avant, un galet avant 17 coopérant avec le rail intermédiaire 22.

La pièce de liaison 16 comporte une première extrémité supérieure 16a fixée sur le bord latéral arrière du second élément 13 et une seconde extrémité inférieure 16b supportant un axe 18 de montage du galet arrière 15 correspondant.

Ainsi que représenté à la Fig. 4, la position de l'extrémité arrière 21 a de la piste de roulement 21 est déterminée pour placer l'extrémité supérieure 16a de la pièce de liaison 16 et le second élément mobile 13 dans l'alignement du premier élément mobile 12, en position déployée de ses éléments mobiles.

Les moyens de déplacement du second élément mobile 13 entre la position déployée et la position escamotée sont constitués, comme représentés à la Fig. 7, par un premier câble 25 dont une extrémité 25a est reliée à l'axe 18 du galet arrière monté sur l'un des bords latéraux dudit second élément 13 et par un second câble 26 dont une extrémité 26a est fixée sur l'axe 18 du galet arrière 15 monté sur l'autre bord latéral de ce second élément mobile 13.

Ces câbles 25 et 26 sont des câbles filetés qui engrènent avec une roue dentée 27 d'entraînement moteur entraînée en rotation par un moteur électrique 28 fixé à un bâti, non représenté, et disposé au-dessous de l'élément fixe 11. Les câbles filetés 25 et 26 sont guidés par exemple dans des gaines respectivement 25b et 26b (Fig. 6).

Par ailleurs, le câble fileté 25 ou 26 est déplaçable en translation par rotation de la roue dentée 27, dans une gorge longitudinale 24 ménagée dans chaque profilé 20 et s'étendant le long de la piste de roulement 21 correspondante (Fig. 5).

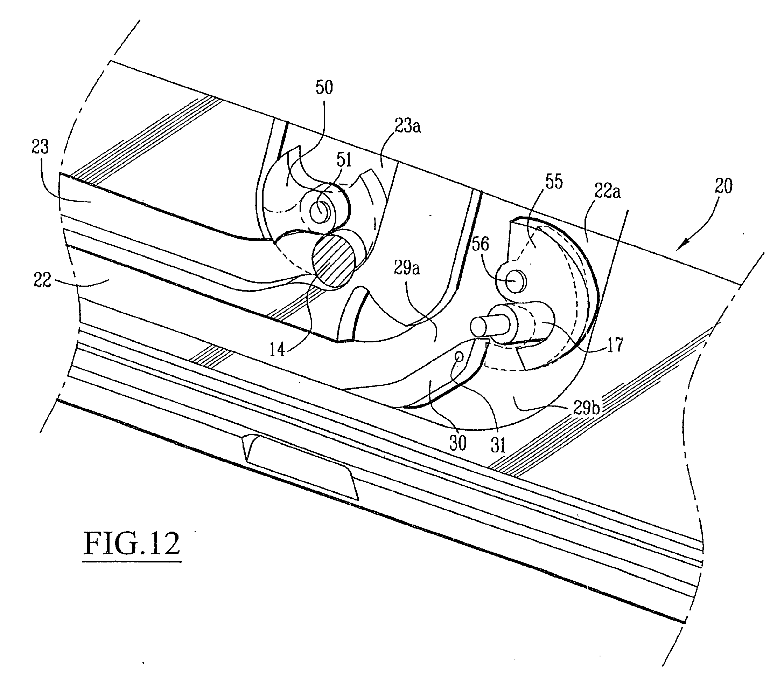

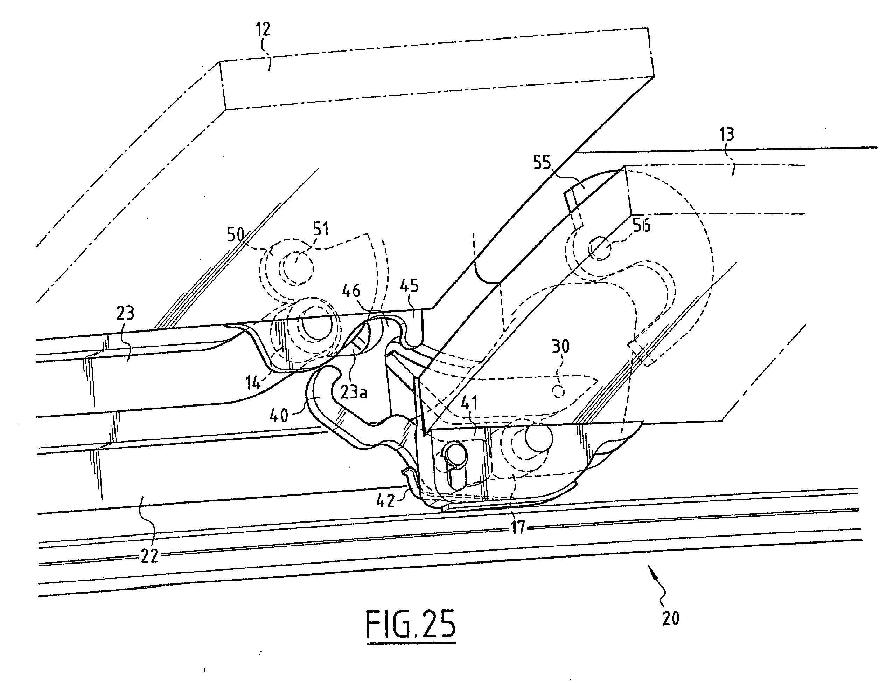

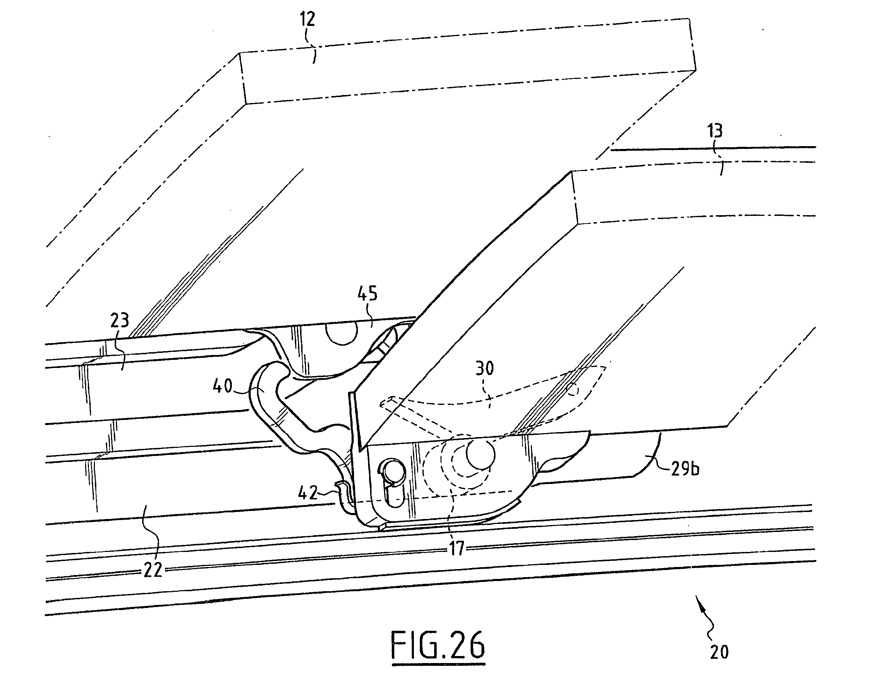

L'extrémité arrière 22a du rail intermédiaire 22 est dirigée vers le haut et est divisée en deux tronçons, respectivement 29a et 29b par une rampe 30. Cette rampe 30 est basculable entre, d'une part, une première position (Figs. 4 et 12) de passage du galet avant 17 du second élément 13 dans le premier tronçon 29a pour placer en position déployée ce second élément 13 et, d'autre part, une seconde position (Figs. 25 et 26) de passage de ce galet avant 17 du second tronçon 29b vers le rail intermédiaire 22 lors du déplacement du second élément mobile 13 vers la position escamotée.

Cette rampe 30 est maintenue dans la première position par un ressort de torsion, non représenté, dont une extrémité est fixée sur un axe de pivotement 31 solidaire de ladite rampe 30 (Fig. 12) et dont une seconde extrémité est fixée sur le profilé 20 correspondant.

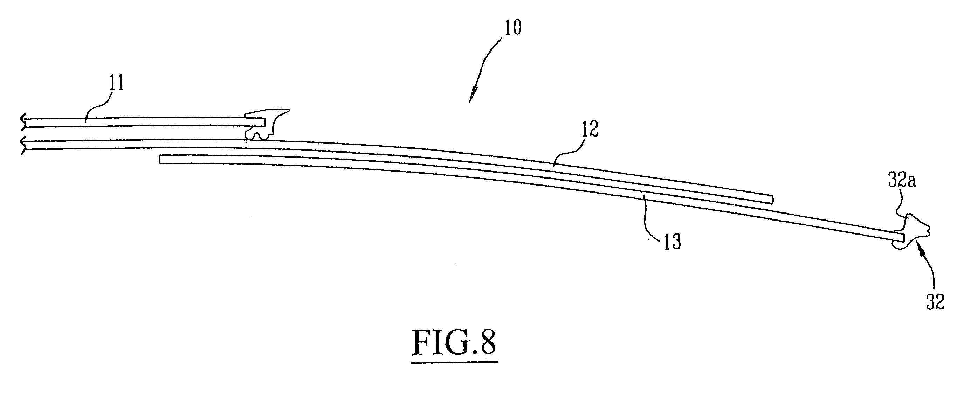

Comme représenté à la Fig. 8, le second élément mobile 13 porte, sur son bord transversal arrière, un joint d'étanchéité 32 qui, lorsque les éléments mobiles 12 et 13 sont en position déployée, assure l'étanchéité avec la portion adjacente de la partie couvrante 10 de l'habitacle 2. Ce joint d'étanchéité 32 comporte une partie en saillie 32a formant butée contre le bord transversal arrière du premier élément mobile 12 lorsque les deux éléments mobiles 12 et 13 sont superposés.

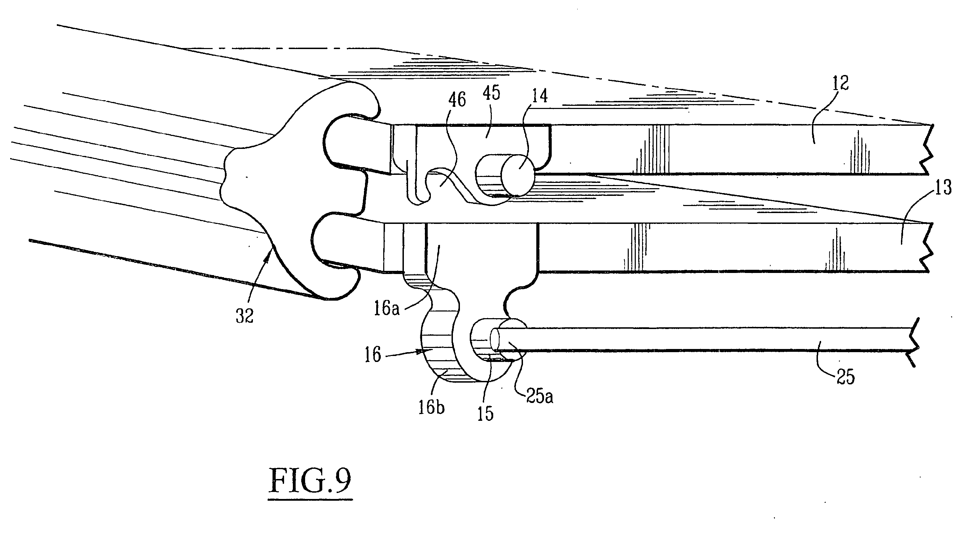

En se reportant maintenant aux Figs. 9 à 11, on va décrire les moyens de déplacement du premier élément mobile 12 entre les positions escamotée et déployée.

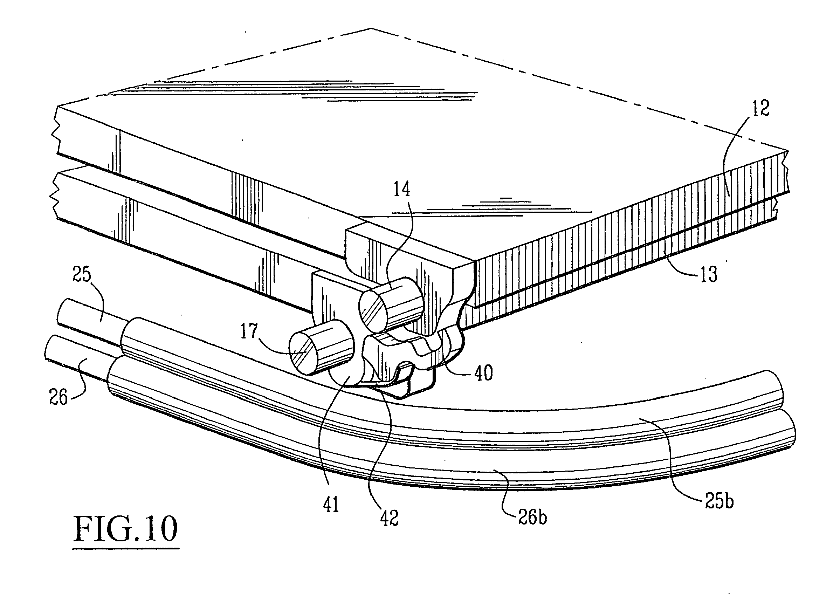

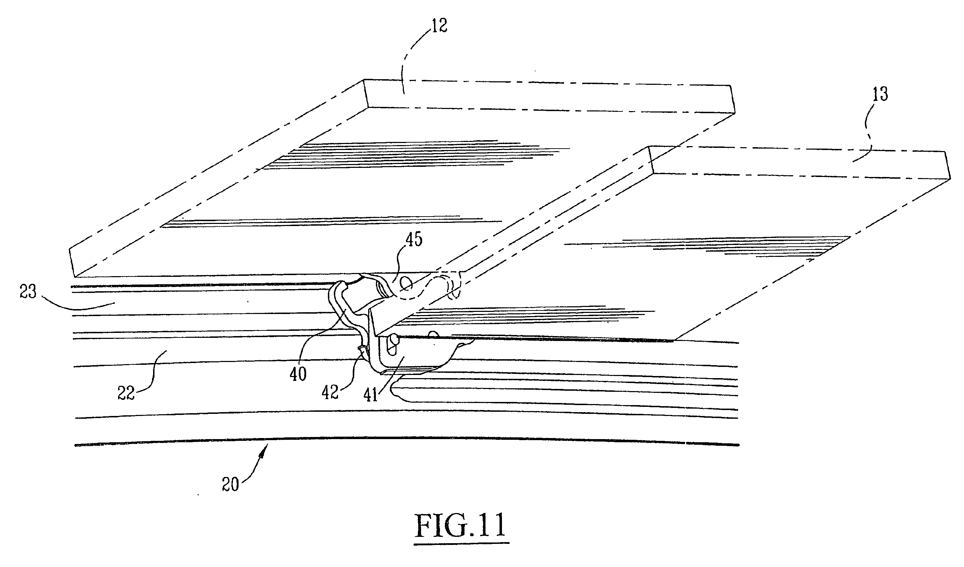

Ainsi que représenté sur les Figs. 10 et 11, ces moyens de déplacement comprennent, de chaque côté du second élément mobile 13, un crochet 40 pivotant, monté sur un support 41 fixé sur le bord latéral avant du second élément mobile 13. Le galet avant 17 du second élément mobile 13 est également monté, libre en rotation, sur ce support 41.

Le crochet 40 est basculable par pivotement entre une position relevée d'accrochage et une position abaissée et il est maintenu dans la position relevée par un ressort à lame 42 dont une première extrémité est fixée sur le support 41 et dont une seconde extrémité est en appui sur ledit crochet 40.

Les moyens de déplacement du premier élément mobile 12 comprennent aussi un organe d'accrochage 45 (Figs. 9 et 11) monté sur chaque bord latéral arrière du premier élément mobile 12 et qui comporte une encoche 46 de blocage du crochet 40 lors du déplacement du premier élément 12 par le second élément 13 vers la position déployée.

Cet organe d'accrochage 45 supporte le galet arrière 14 du premier élément mobile 12 et qui se déplace dans le rail supérieur 23.

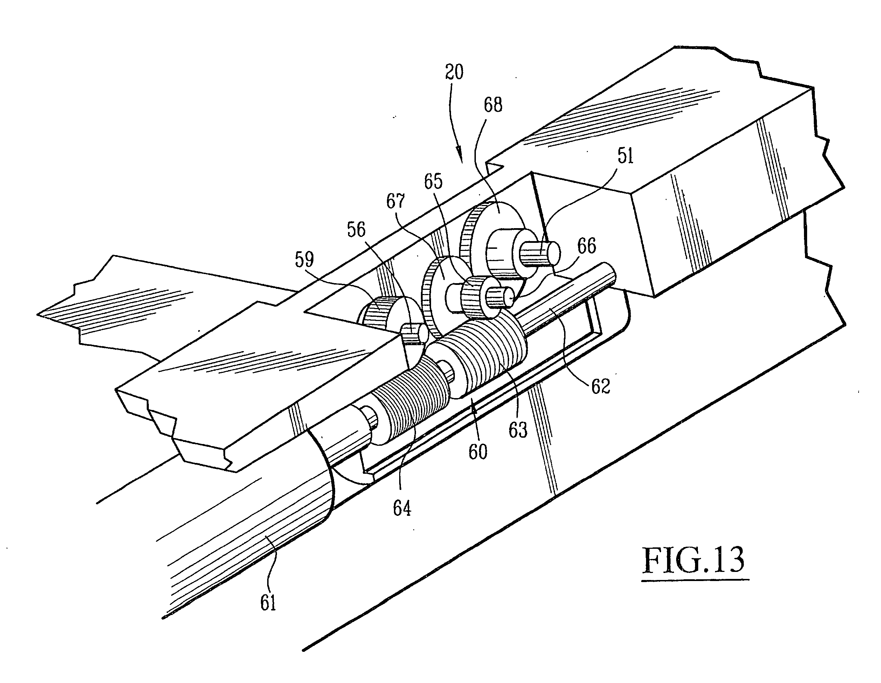

En se reportant aux Figs. 12 et 13, on va décrire les moyens de verrouillage et de déverrouillage des éléments mobiles 12 et 13.

Les moyens de verrouillage du premier élément mobile 12 dans la position déployée comprennent, pour chaque galet arrière 14 de ce premier élément mobile 12, un loquet 50 pivotant autour d'un axe d'articulation 51 par des moyens de commande 60 (Fig. 13) entre une première position escamotée représentée en trait plein à la Fig. 12 dans laquelle le loquet 50 libère l'extrémité arrière 23a du rail supérieur 23, une deuxième position représentée en pointillés à la Fig. 12 et dans laquelle le loquet 50 est en saillie dans le rail supérieur 23 derrière le galet arrière 14 pour bloquer ce galet 14 dans l'extrémité arrière 23a et une troisième position représentée en traits mixtes à la Fig. 12 et dans laquelle ledit loquet 50 est placé devant le galet 14 pour le repousser vers l'extrémité avant dudit rail supérieur 23.

Les moyens de verrouillage et de déverrouillage du second élément 13 dans la position déployée comprennent, pour chaque galet avant 17 de ce second élément 13, un crochet 55 pivotant autour d'un axe d'articulation 56 par les organes de commande 60 entre une première position escamotée représentée en trait plein à la Fig. 12 et dans laquelle ce crochet 55 libère le second tronçon 29b de l'extrémité arrière 22a du rail intermédiaire 22 et une seconde position représentée en pointillés à la Fig. 12 et dans laquelle le crochet 55 est en saillie dans ce second tronçon 29b pour bloquer le galet 17 dans ladite extrémité arrière 22a.

Ces organes de commande 60 du loquet 50 et du crochet 55 (Fig. 13) montés dans chaque profilé 20 sont formés par un moteur électrique 61 entraînant en rotation un arbre 62 portant deux vis, respectivement 63 et 64. La première vis 63 engrène avec un pignon 65 monté sur un axe 66 sur lequel est également monté un pignon 67. Ce pignon 67 engrène avec un pignon 68 porté par l'axe 51 de pivotement du loquet 50.

Ainsi, lors de la rotation de l'arbre 62, la vis 63 entraîne le pignon 65 qui entraîne à son tour l'axe 66, puis les pignons 67 et 68 ce qui provoque le basculement du loquet 50 par l'intermédiaire de son axe d'articulation 51.

La seconde vis 64 engrène avec un pignon 69 porté directement par l'axe 56 de pivotement du crochet 55.

Ainsi, la vis 64 entraîne en rotation le pignon 59 ce qui provoque le basculement du crochet 55 entre les deux positions par l'intermédiaire de son axe 56 qui tourne en sens opposé à l'axe 51.

Le rapport de démultiplication entre, d'une part, les moyens d'entraînement du loquet 50 et, d'autre part, les moyens d'entraînement du crochet 55 est déterminé pour obtenir une vitesse de rotation du loquet 50 supérieure à la vitesse de rotation du crochet 55. Par ailleurs, le rapport d'entraînement entre le crochet 55 et le loquet 50 est inverse.

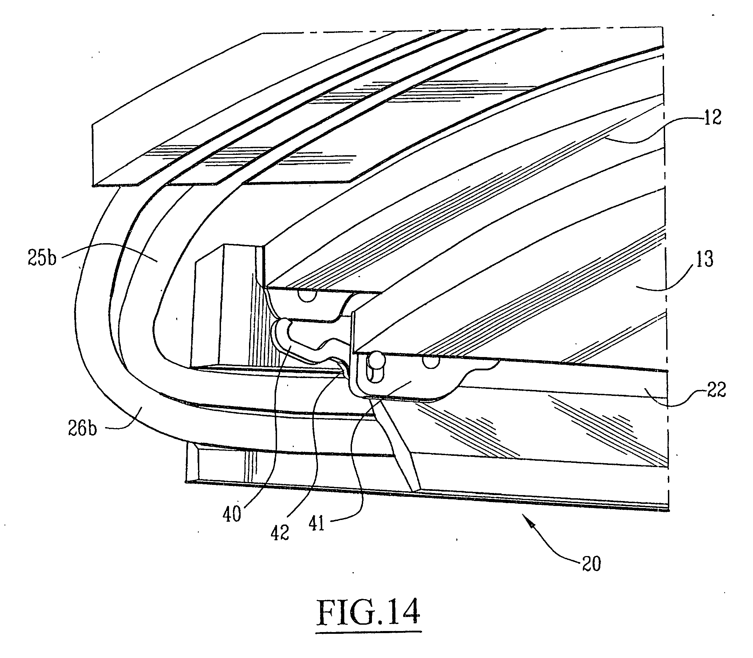

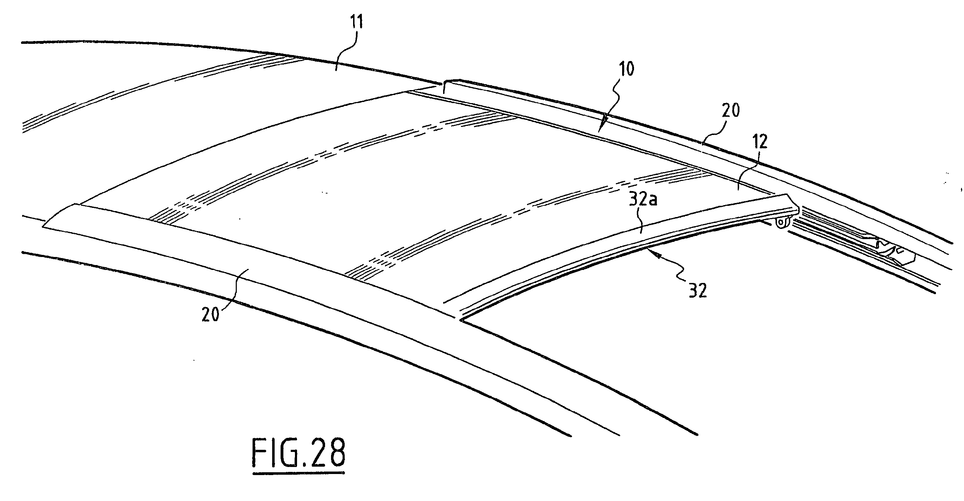

En se reportant maintenant aux Figs. 14 à 28, on va décrire les différentes phases de déplacement des éléments mobiles 12 et 13 entre les positions escamotées et déployées et inversement.

En position escamotée, les éléments mobiles 12 et 13 sont superposés et sont disposés au-dessous de l'élément fixe 11, comme représenté à la Fig. 14.

Pour obturer complètement la partie couvrante 10 de l'habitacle 2, l'occupant du véhicule automobile commande par exemple par l'intermédiaire d'un contacteur, non représenté, le moteur électrique 28 de façon à entraîner en rotation la roue dentée 27. La rotation de cette roue dentée 27 provoque la translation des câbles filetés 25 et 26 de façon à déplacer le second élément mobile 13 vers l'arrière du véhicule automobile (Fig. 7).

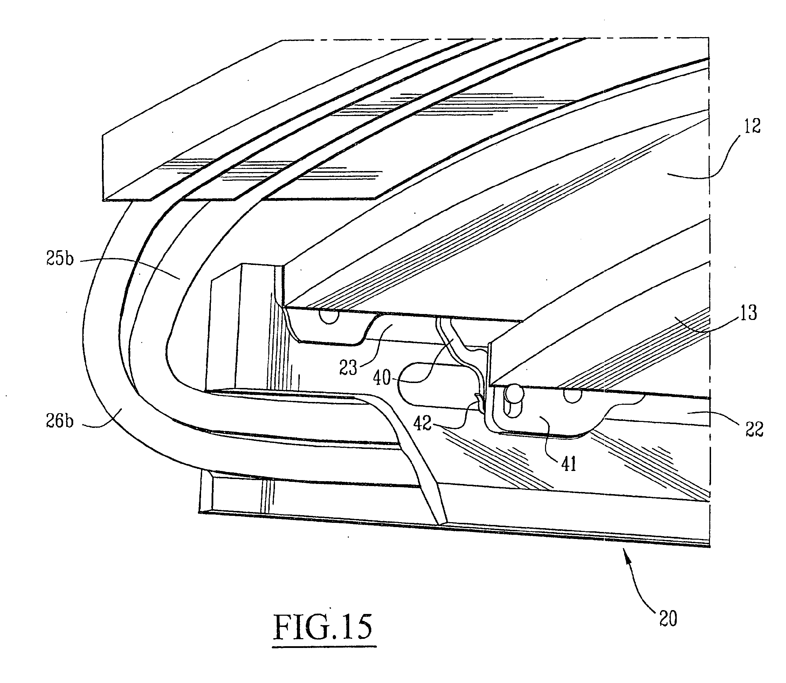

Au cours du déplacement du second élément mobile 13, chaque galet arrière 15 roule sur la piste de roulement 21 correspondante et chaque galet avant 17 se déplace dans le rail intermédiaire 22 correspondant et le premier élément mobile 12 reste en position escamotée, ainsi que représentée à la Fig. 15.

Chaque crochet 40 est maintenu en position relevée par le ressort à lame 42.

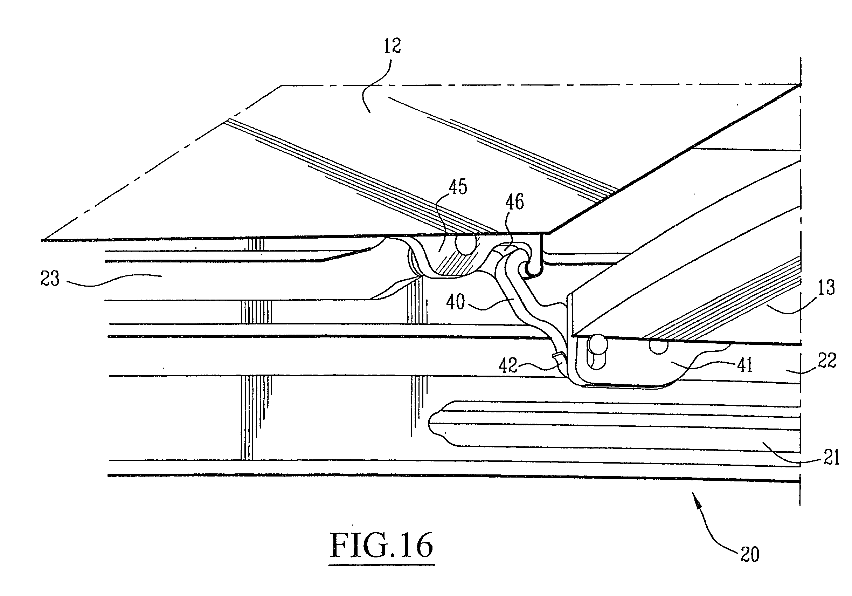

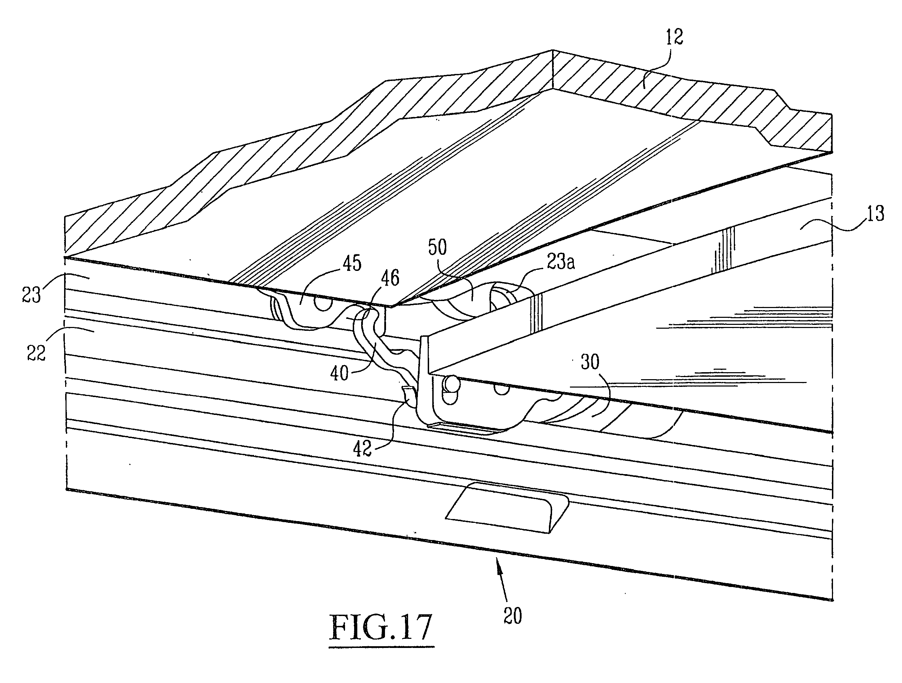

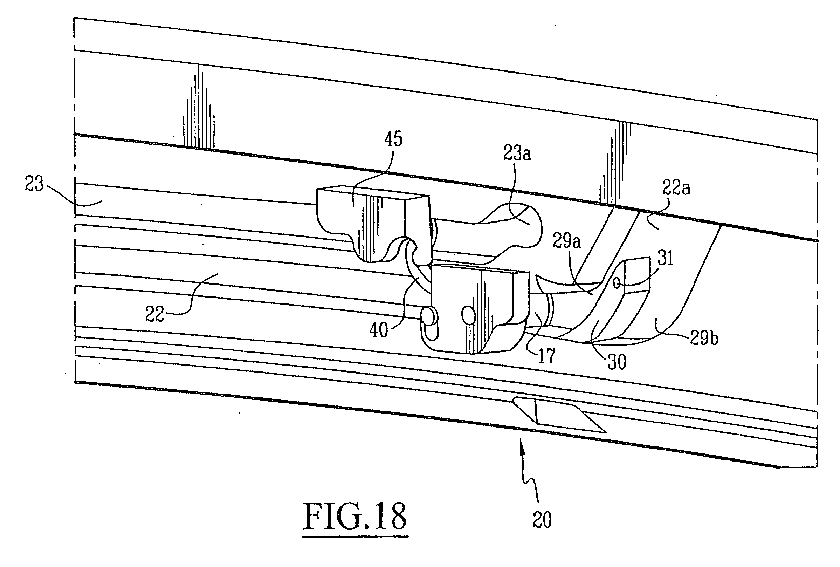

Dès que le bord transversal avant du second élément 13 arrive sensiblement à la hauteur du bord transversal arrière du premier élément mobile 12, comme représenté à la Fig. 16, chaque crochet 40 s'engage dans l'encoche 46 de l'organe d'accrochage 45 fixé sur le bord latéral arrière du premier élément mobile 12 si bien que le premier élément mobile 12 est tiré vers l'arrière du véhicule automobile par l'intermédiaire des crochets 40 solidaires du second élément mobile 13 qui est lui-même déplacé en translation par les câbles filetés 25 et 26. Ainsi, les éléments mobiles 12 et 13 se déplacent vers l'arrière du véhicule automobile, ainsi que représenté sur les Figs. 17 et 18.

En se rapprochant de l'arrière du véhicule automobile, les galets arrière 14 du premier élément 12 se rapprochent chacun de l'extrémité arrière 23a du rail supérieur 23 tandis que chaque galet 15 se rapproche de l'extrémité arrière 21a de la piste de roulement 21 et chaque galet avant 17 du second élément mobile 13 se déplace vers le premier tronçon 29a de l'extrémité arrière 22a du rail intermédiaire 22, comme représenté sur les Figs. 17 et 18.

Les loquets 50 et les crochets 55 sont en position escamotés de façon à libérer les rails 22 et 23 et la rampe 30 est maintenue en position basse.

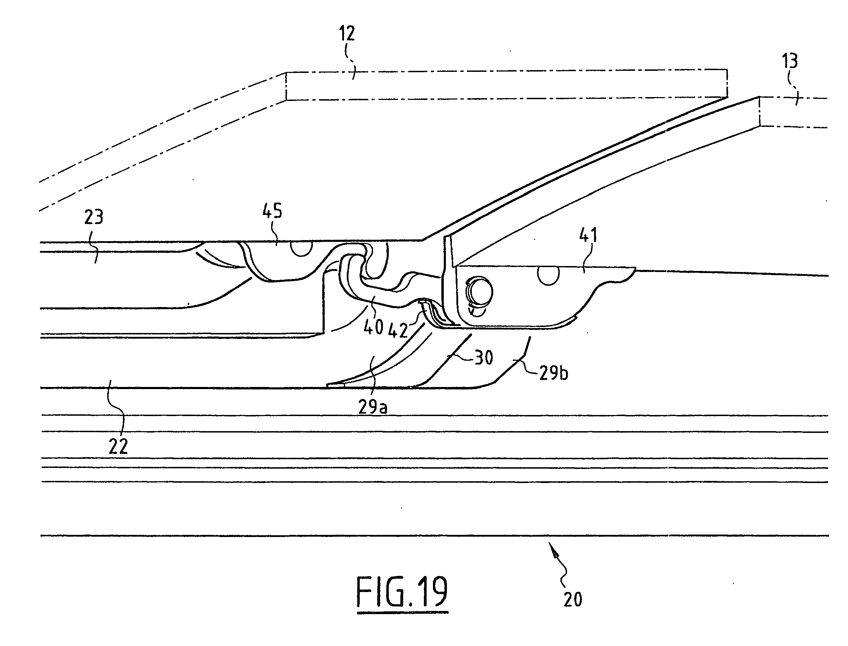

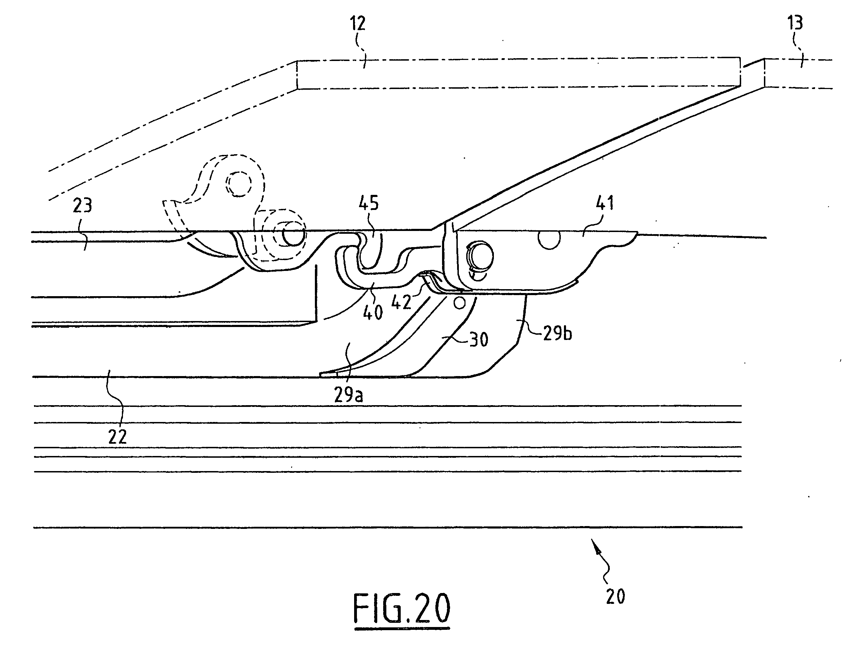

Chaque galet avant 17 monte dans le premier tronçon 29a de l'extrémité arrière 22a du rail intermédiaire 22 jusqu'à venir en butée dans ladite extrémité arrière 22a ce qui a pour effet de faire basculer vers le bas chaque crochet 40 tout en exerçant une traction sur le premier élément mobile 12 vers l'arrière du véhicule automobile, comme représenté aux Figs. 19 et 20.

Dans cette position, chaque galet arrière 14 du premier élément mobile 12 n'est pas encore en butée contre l'extrémité arrière 23a du rail supérieur 23 et un faible jeu subsiste entre le bord transversal arrière du premier élément mobile 12 et le bord transversal avant du second élément mobile 13, comme cela apparaît à la Fig. 20.

Compte tenu de l'orientation vers le haut des extrémités arrière 21a et 22a respectivement de la piste de roulement 21 et du rail intermédiaire 22, le second élément mobile 13 est progressivement déplacé vers le haut pour se placer dans l'alignement du premier élément mobile 12.

A ce stade, chaque moteur électrique 61 est actionné par l'intermédiaire de moyens de commande appropriés ce qui entraîne en rotation l'arbre 62 et les vis 63 et 64 et, de ce fait, le basculement de chaque loquet 50 et de chaque crochet 55 par l'intermédiaire des pignons correspondants.

Chaque loquet 50 pivote autour de son axe 51 et vient exercer une poussée sur le galet arrière 14 correspondant du premier élément mobile 12 ce qui déplace ce premier élément mobile 12 vers l'arrière du véhicule automobile de façon à amener chaque galet arrière 14 en butée contre l'extrémité arrière 23a du rail supérieur 23.

Ainsi, le bord transversal arrière du premier élément 12 vient progressivement s'appliquer contre le bord transversal avant du second élément 13.

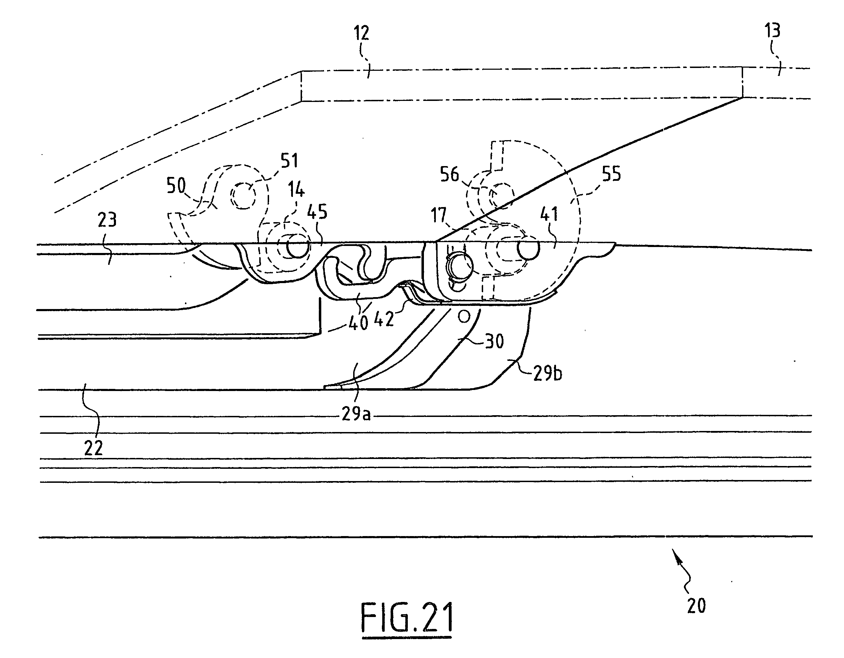

Simultanément au basculement de chaque loquet 50, chaque crochet 55 pivote autour de son axe 56 et vient bloquer le galet avant 17 dans l'extrémité arrière 22a du rail intermédiaire 22 (Fig. 21).

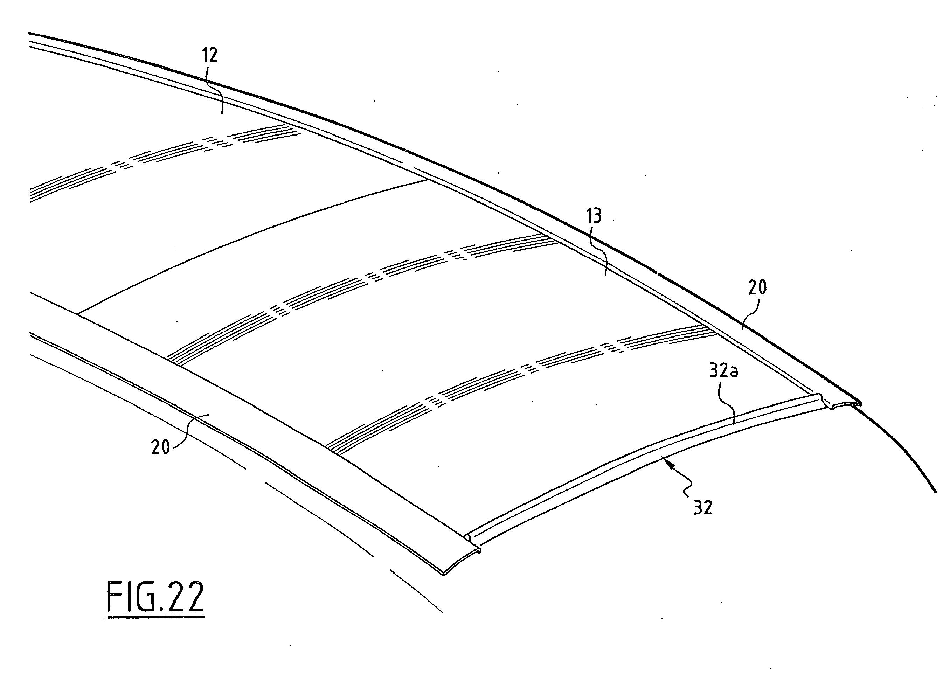

Dans cette position, la partie couvrante 10 de l'habitacle 2 est complètement fermée, comme représenté à la Fig. 22, les éléments mobiles 12 et 13 étant alignés et jointifs.

Le joint d'étanchéité 32 est en contact avec le reste de ladite partie couvrant 10 de façon à assurer l'étanchéité de l'habitacle.

Lorsque l'un des occupants souhaite découvrir la partie supérieure de l'habitacle 2 du véhicule automobile, il agit sur un contacteur ce qui provoque dans un premier temps, l'alimentation de chaque moteur électrique 61 et par conséquent la rotation de l'arbre 62 et des vis 63 et 64.

Compte tenu du rapport de démultiplication déterminé pour le basculement des loquets 50 et des crochets 55 entre les positions de verrouillage et de déverrouillage, les loquets 50 sont entraînés en rotation plus rapidement que les crochets 55.

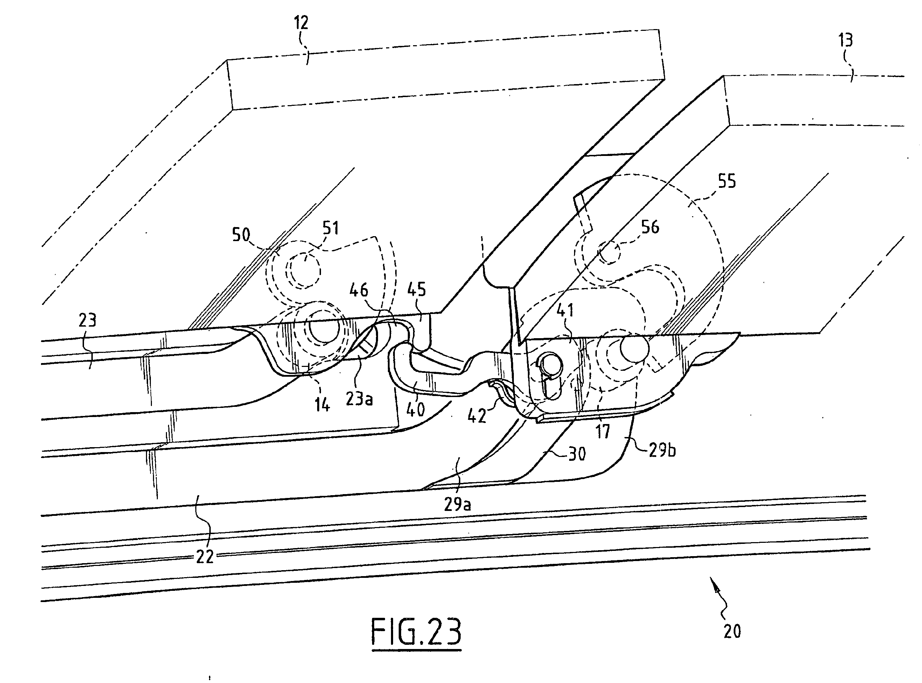

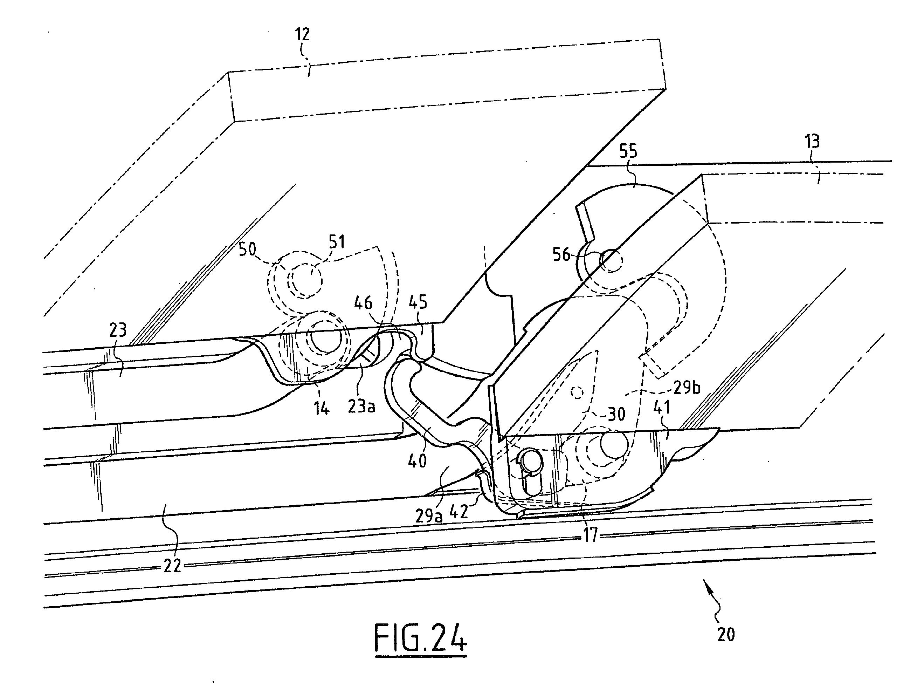

De ce fait et comme représenté sur les Figs. 23 et 24, chaque loquet 50 effectue une rotation de 150° et vient buter contre le galet arrière 14 correspondant du premier élément mobile 12 pour pousser ce premier élément mobile 12 vers l'avant du véhicule automobile et écarter le bord transversal arrière dudit premier élément mobile 12 du bord transversal avant du second élément mobile 13.

Chaque crochet 55 bascule également ce qui a pour effet de libérer le galet 17 correspondant qui tombe dans le second tronçon 29b de l'extrémité arrière 22a du rail intermédiaire 22 (Fig. 23) afin de positionner le bord transversal avant du second élément mobile 13 au-dessous du bord transversal arrière du premier élément mobile 12 (Fig. 24).

Dans cette position, chaque crochet 40 s'écarte de l'encoche 46 de l'organe d'accrochage 45 correspondant.

Le moteur électrique 28 est actionné automatiquement pour entraîner en rotation la roue dentée 27 qui déplace en translation les câbles filetés 25 et 26 et par conséquent le second élément 13 vers l'avant du véhicule automobile.

Ainsi que représenté sur les Figs. 24 à 26, chaque galet avant 17 du second élément mobile 13 passe du second tronçon 29b de l'extrémité arrière 22a dans le rail intermédiaire 22 et soulève la rampe 30 à l'encontre de son ressort de rappel.

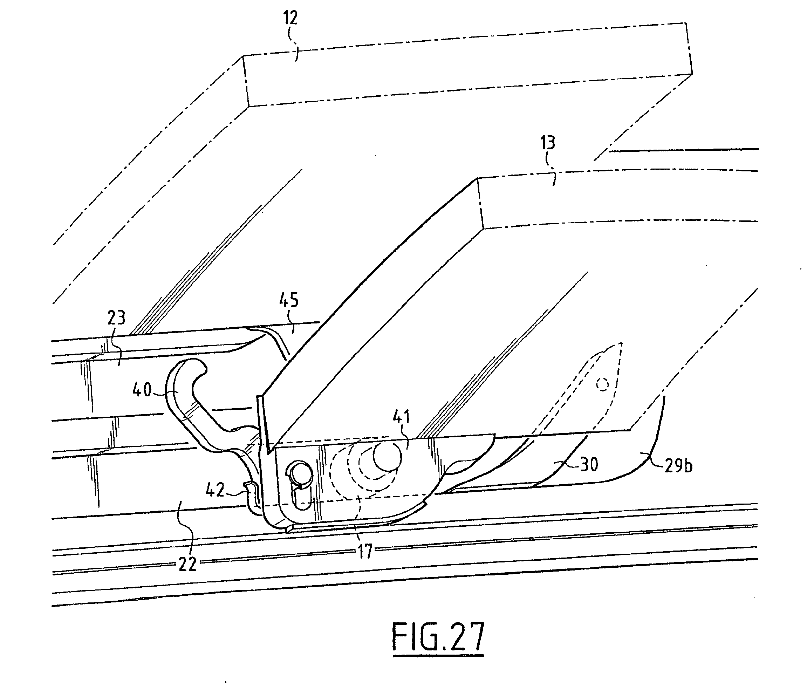

Chaque crochet 40 glisse le long de l'organe d'accrochage 45 et le second élément mobile 13 se déplace vers l'avant du véhicule automobile au-dessous du premier élément mobile 12, ainsi que représenté à la Fig. 27.

Ensuite, la partie en saillie 32a du joint d'étanchéité 32 porté par le second élément mobile 30 vient buter contre le bord transversal arrière du premier élément mobile 12 de façon à déplacer ce premier élément mobile 12 vers l'avant du véhicule jusqu'à la position escamotée desdits éléments mobiles 12 et 13.

Dans le mode de réalisation représenté sur les figures, l'élément fixe 11 et le premier élément mobile 12 constituent chacun une partie du pavillon du véhicule automobile tandis que le second élément mobile 13 constitue une partie d'un hayon de ce véhicule automobile.

Selon une variante, les élément mobiles 12 et 13 peuvent constituer une partie du pavillon du véhicule automobile.

Le dispositif de commande selon l'invention présente l'avantage de ne comporter qu'un seul moteur électrique pour le déplacement successif des éléments mobiles de la partie couvrante de l'habitacle du véhicule automobile, tout en permettant de pouvoir découvrir une surface importante de cet habitacle.

## Revendications

1. Dispositif de commande du déplacement d'éléments mobiles (12, 13) d'une partie couvrante (10) d'un habitacle (2) de véhicule automobile, ladite partie couvrante (10) comprenant successivement un élément fixe (11), un premier et un second éléments (12, 13) mobiles entre une position déployée et une position escamotée, **caractérisé en ce qu'**il comprend :
- au moins un moyen (23) de guidage du premier élément mobile (12) et au moins un moyen de guidage (22, 23) du second élément mobile (13) formé par une piste (21) de roulement d'un galet arrière (15) monté sur chaque bord latéral arrière de ce second élément mobile (13) par une pièce de liaison (16) et par un rail intermédiaire (22) de roulement d'un galet avant (17) monté sur chaque bord latéral avant dudit second élément (13).
- des moyens (25, 26, 27, 28 ; 32 ; 40, 41, 42) de déplacement par coulissement des éléments mobiles (12, 13) d'une part, entre la position déployée dans laquelle les,éléments mobiles (12, 13) sont alignés et jointifs, une position intermédiaire dans laquelle les éléments mobiles (12, 13) sont superposés et la position escamotée dans laquelle lesdits éléments mobiles (12, 13) sont superposés avec l'élément fixe (11) et, d'autre part, entre les positions escamotée et déployée, et
- des moyens (50, 55, 60) de verrouillage et de déverrouillage de chaque élément mobile (12, 13) dans la position déployée.

2. Dispositif selon la revendication 1, **caractérisé en ce que** les moyens de déplacement du premier élément mobile (12) comprennent, d'une part, des moyens de déplacement entre les positions déployée et escamotée de ce premier élément et, d'autre part, des moyens de déplacement entre les positions escamotée et déployée dudit premier élément mobile (12), lesdits moyens étant portés par le second élément mobile (13).

3. Dispositif selon la revendication 1, **caractérisé en ce que** ledit moyen de guidage du premier élément mobile (12) est formé par un rail supérieur (23) de roulement de deux galets (14) montés respectivement sur le bord latéral arrière et le bord latéral avant dudit premier élément.

4. Dispositif selon la revendication 1 ou 4, **caractérisé en ce que** la piste (21) de roulement, le rail intermédiaire (22) et le rail supérieur (23) sont ménagés du bas vers le haut sur un profil (20) longitudinal monté sur chaque montant latéral de la partie couvrante (10).

5. Dispositif selon l'une quelconque des revendications précédentes, **caractérisé en ce que** les extrémités arrière (22a, 23a) du rail intermédiaire (22) et du rail supérieur (23) sont situées à la même distance de la piste de roulement (21).

6. Dispositif selon la revendication 1, **caractérisé en ce que** la pièce de liaison (16) comporte une extrémité supérieure (16a) fixée sur le bord latéral avant du second élément mobile (13) et une extrémité inférieure (16b) supportant un axe (18) de montage du galet arrière (15) correspondant.

7. Dispositif selon l'une quelconque des revendications précédente, **caractérisé en ce que** la position de l'extrémité arrière (21a) de la piste de roulement (21) est déterminée pour placer l'extrémité supérieure (16a) de la pièce de liaison (16) et le second élément mobile (13) dans l'alignement du premier élément mobile (12), en position déployée desdits éléments mobiles.

8. Dispositif selon l'une quelconque des revendications précédentes, **caractérisé en ce que** les moyens de déplacement du second élément (13) sont formés par deux câbles filetés, (25, 26) ayant chacun une extrémité (25a, 26a) solidaire de l'axe (18) de montage de l'un des galets arrière (15) du second élément mobile (13), chaque câble filetée (25, 26) engrenant avec une roue dentée (27) entraînée en rotation par un moteur électrique (28).

9. Dispositif selon la revendication 8, **caractérisé en ce que** chaque câble fileté (25, 26) est déplaçable en translation par la rotation de la roue dentée (27) d'entraînement moteur dans une gorge longitudinale (24) ménagée dans chaque profilé (20) et s'étendant le long de la piste de roulement (21) correspondante.

10. Dispositif selon l'une quelconque des revendications précédentes, **caractérisé en ce que** l'extrémité arrière (22a) du rail intermédiaire (22) est dirigée vers le haut et est divisée en deux tronçons (29a, 29b) par une rampe (30) basculable entre, d'une part, une première position de passage du galet avant (17) du second élément mobile (13) dans le premier tronçon (29a) pour placer en position déployée ce second élément mobile (13) et, d'autre part, une seconde position de passage de ce galet avant (17) du second tronçon (29b) vers le rail intermédiaire (22) lors du déplacement du second élément mobile (13) vers la position escamotée.

11. Dispositif selon la revendication 10, **caractérisé en ce que** la rampe (30) est maintenue dans la première position par un ressort de torsion dont une première extrémité est fixée sur un axe de pivotement solidaire de ladite rampe (30) et dont une autre extrémité est fixée sur le profilé (20) correspondant.

12. Dispositif selon l'une quelconque des revendications précédentes, **caractérisé en ce que** les moyens de déplacement du premier élément mobile (12) entre les position déployée et escamotée sont formés par un joint d'étanchéité (32) monté sur le bord transversal arrière du second élément mobile (13) et comportant une partie en saillie (32a) formant butée contre le bord transversal arrière du premier élément mobile (12) dans la position superposée desdits éléments mobiles.

13. Dispositif selon l'une quelconque des revendications précédentes, **caractérisé en ce que** les moyens de déplacement du premier élément mobile (12) entre les positions escamotée et déployée comprennent un crochet (40) pivotant monté sur un support (41) fixé sur chaque bord latéral avant du second élément mobile (13) et destiné à coopérer avec un organe d'accrochage (45) monté sur chaque bord latéral arrière du premier élément mobile (12) et comportant une encoche (46) de blocage du crochet (40) lors du déplacement du premier élément mobile (12) par le second élément mobile (13) vers la position déployée.

14. Dispositif selon la revendication 13, **caractérisé en ce que** le crochet (40) est basculable par pivotement entre une position relevée d'accrochage dans l'encoche (46) de blocage et une position abaissée de glissement au-dessous de l'organe d'accrochage (45).

15. Dispositif selon la revendication 13 ou 14, **caractérisé en ce que** le crochet (40) est maintenu dans la position relevée par un ressort à lame (42).

16. Dispositif selon l'une quelconque des revendications précédentes, **caractérisé en ce que** les moyens de verrouillage et de déverrouillage du premier élément mobile (12) comprennent, pour chaque galet arrière (14) dudit premier élément (12), un loquet (50) pivotant par des organes de commande (60) entre une première position escamotée libérant l'extrémité arrière (23a) du rail supérieur (23) et une deuxième position en saillie dans ce rail supérieur (23) derrière le galet arrière (14) pour bloquer ce galet (14) dans l'extrémité arrière (23a) et une troisième position devant le galet arrière (14) pour le repousser vers l'extrémité avant dudit rail supérieur (23).

17. Dispositif selon l'une quelconque des revendications 1 à 15, **caractérisé en ce que** les moyens de verrouillage et de déverrouillage du second élément mobile (13) comprennent, pour chaque galet avant (17) dudit second élément (13), un crochet (55) pivotant par des organes de commande (60) entre une première position escamotée libérant le second tronçon (29b) de l'extrémité arrière (22a) du rail intermédiaire (22) et une seconde position en saillie dans ce second tronçon (29b) pour bloquer ce galet avant (17) dans ladite extrémité arrière (22a).

18. Dispositif selon la revendication 16, **caractérisé en ce que** les organes de commande (60) du pivotement du loquet (50) et du crochet (55) sont formés par un moteur électrique (61) entraînant en rotation un arbre (62) portant une première vis (63) engrenant avec un pignon d'entraînement (65) du loquet (50) par l'intermédiaire d'au moins deux roues dentées (67, 68) et une deuxième vis (64) engrenant avec un pignon d'entraînement (59) du crochet (55), le rapport de démultiplication entre, d'une part, l'entraînement du loquet (50) et d'autre part, l'entraînement du crochet (55) étant déterminé pour obtenir une vitesse de rotation du loquet (50) supérieure à la vitesse de rotation du crochet (55) et le rapport d'entraînement étant inverse entre le crochet (55) et le loquet (50).

19. Dispositif selon l'une quelconque des revendications précédentes, **caractérisé en ce que** le premier et le second éléments mobiles (12, 13) constituent une partie du pavillon du véhicule automobile.

20. Dispositif selon l'une quelconque des revendications 1 à 18, **caractérisé en ce que** le premier élément mobile (12) constitue une partie du pavillon du véhicule et le second élément mobile (13) constitue une partie d'un hayon dudit véhicule automobile.

21. Véhicule automobile, **caractérisé en ce qu'**il est équipé d'un dispositif de commande du déplacement d'éléments mobiles (12, 13) d'une partie couvrante (10) de l'habitacle (2) selon l'une quelconque des revendications 1 à 20.

## Claims

1. Device for controlling the movement of movable elements (12, 13) of a covering part (10) of the passenger compartment (2) of a motor vehicle, said covering part (10) comprising successively a fixed element (11), a first and a second element (12, 13) which are movable between a deployed position and a retracted position, **characterised in that** it comprises:
- a least one means (23) for guiding the first movable element (12) and at least one means (22, 23) for guiding the second movable element (13) formed by a rolling track (21) of a rear roller (15) mounted on each rear side edge of this second movable element (13) by a connecting member (16) and by an intermediate rail (22) for carrying a front roller (17) mounted on each front side edge of said second element (13),
- means (25, 26, 27, 28; 32; 40, 41, 42) for slidingly moving the movable elements (12, 13) on the one hand between the deployed position in which the movable elements (12, 13) are aligned and adjacent, an intermediate position in which the movable elements (12, 13) are superimposed and the retracted position in which said movable elements (12, 13) are superimposed with the fixed element (11) and, on the other hand, between the retracted and deployed positions, and
- means (50, 55, 60) for locking and unlocking each movable element (12, 13) in the deployed position.

2. Device according to claim 1, **characterised in that** the means for moving the first movable element (12) comprise, on the one hand, means for moving between the deployed and retracted positions of this first element and, on the other hand, means for moving between the retracted and deployed positions of this first movable element (12), said means being carried by the second movable element (13).

3. Device according to claim 1, **characterised in that** said means for guiding the first movable element (12) are formed by an upper rail (23) for carrying two rollers (14) mounted on the rear side edge and front side edge, respectively, of said first element.

4. Device according to claim 1 or 4, **characterised in that** the rolling track (21), the intermediate rail (22) and the upper rail (23) are formed from bottom to top on a longitudinal profiled member (20) mounted on each lateral upright of the covering part (10).

5. Device according to any one of the preceding claims, **characterised in that** the rear ends (22a, 23a) of the intermediate rail (22) and of the upper rail (23) are located at the same distance from the rolling track (21).

6. Device according to claim 1, **characterised in that** the connecting member (16) comprises an upper end (16a) fixed to the front side edge of the second movable element (13) and a lower end (16b) supporting a mounting spindle (18) for the corresponding rear roller (15).

7. Device according to any one of the preceding claims, **characterised in that** the position of the rear end (21a) of the rolling track (21) is designed so as to place the upper end (16a) of the connecting member (16) and the second movable element (13) in alignment with the first movable element (12), in the deployed position of said movable elements.

8. Device according to any one of the preceding claims, **characterised in that** the means for moving the second element (13) are formed by two threaded cables (25, 26), each having one end (25a, 26a) integral with the mounting spindle (18) for one of the rear rollers (15) of the second movable element (13), each threaded cable (25, 26) meshing with a toothed wheel (27) driven in rotation by an electric motor (28).

9. Device according to claim 8, **characterised in that** each threaded cable (25, 26) is movable in translation by the rotation of the driving toothed wheel (27) in a longitudinal groove (24) formed in each profiled member (20) and extending along the corresponding rolling track (21).

10. Device according to any one of the preceding claims, **characterised in that** the rear end (22a) of the intermediate rail (22) is directed upwards and is divided into two sections (29a, 29b) by a swivellable ramp (30) between, on the one hand, a first position of transit of the front roller (17) of the second movable element (13) into the first section (29a) so as to place this second movable element (13) in the deployed position and, on the other hand, a second position of transit of this front roller (17) from the second section (29b) towards the intermediate rail (22) during the movement of the second movable element (13) into the retracted position.

11. Device according to claim 10, **characterised in that** the ramp (30) is held in the first position by a torsion spring, a first end of which is fixed to a pivoting spindle firmly attached to said ramp (30) while another end is fixed to the corresponding profiled member (20).

12. Device according to any one of the preceding claims, **characterised in that** the means for moving the first movable element (12) between the deployed and retracted positions are formed by a sealing joint (32) mounted on the rear transverse edge of the second movable element (13) and comprising a projecting part (32a) forming an abutment against the rear transverse edge of the first movable element (12) in the superimposed position of said movable elements.

13. Device according to any one of the preceding claims, **characterised in that** the means for moving the first movable element (12) between the retracted and deployed positions comprise a hook (40) pivotably mounted on a support (41) fixed to each front side edge of the second movable element (13) and intended to cooperate with a hooking member (45) mounted on each rear side edge of the first movable element (12) and comprising a notch (46) for securing the hook (40) during the movement of the first movable element (12) by the second movable element (13) into the deployed position.

14. Device according to claim 13, **characterised in that** the hook (40) can be swivelled by pivoting between a raised position of hooking into the securing notch (46) and a lowered position of sliding over the hooking member (45).

15. Device according to claim 13 or 14, **characterised in that** the hook (40) is held in the raised position by a leaf spring (42).

16. Device according to any one of the preceding claims, **characterised in that** the means for locking and unlocking the first movable element (12) comprise, for each rear roller (14) of said first element (12), a latch (50) pivoting by means of control members (60) between a first retracted position which frees the rear end (23a) of the upper rail (23) and a second position projecting into this upper rail (23) behind the rear roller (14) in order to secure this roller (14) in the rear end (23a) and a third position in front of the rear roller (14) for pushing it back towards the front end of said upper rail (23).

17. Device according to any one of claims 1 to 15, **characterised in that** the means for locking and unlocking the second movable element (13) comprise, for each front roller (17) of said second element (13), a hook (55) pivoting by means of control members (60) between a first retracted position which frees the second section (29b) of the rear end (22a) of the intermediate rail (22) and a second position projecting into this second section (29b) in order to secure this front roller (17) in said rear end (22a).

18. Device according to claim 16, **characterised in that** the control means (60) for controlling the pivoting of the latch (50) and hook (55) are formed by an electric motor (61) which rotationally drives a shaft (62) bearing a first screw (63) engaging with a drive pinion (65) of the latch (50) via at least two toothed wheels (67, 68) and a second screw (64) engaging with a drive pinion (59) of the hook (55), the stepping down ratio between the drive of the latch (50) on the one hand and the drive of the hook (55) on the other hand being designed so as to obtain a speed of rotation of the latch (50) which is higher than the speed of rotation of the hook (55) and the drive ratio being inverse between the hook (55) and the latch (50).

19. Device according to any one of the preceding claims, **characterised in that** the first and second movable elements (12, 13) form part of the roof of the motor vehicle.

20. Device according to any one of claims 1 to 18, **characterised in that** the first movable element (12) forms a part of the roof of the vehicle and the second movable element (13) forms part of a hatch of said motor vehicle.

21. Motor vehicle, **characterised in that** it is fitted with a device for controlling the movement of movable elements (12, 13) of a covering part (10) of the passenger compartment (2) according to any one of claims 1 to 20.

## Patentansprüche

1. Vorrichtung zur Betätigung der Verschiebung beweglicher Teile (12, 13) eines abdeckenden Teils (10) eines Kraftfahrzeug-Karosseriegehäuses, wobei der genannte abdeckende Teil (10) nacheinander ein feststehendes Teil (11) umfasst, ein erstes und ein zweites Teil (12, 13), die zwischen einer ausgebreiteten und einer eingezogenen Stellung beweglich sind, **dadurch gekennzeichnet, dass** sie umfasst:
- mindestens ein Mittel (23) zur Führung des ersten beweglichen Teils (12) und mindestens ein Mittel (22, 23) zur Führung des zweiten beweglichen Teils (13), bestehend aus einer Rollbahn (21) für eine hintere Rolle (15), die durch ein Verbindungsstück (16) auf jedem hinteren Seitenrand dieses zweiten beweglichen Teils (13) montiert ist, und aus einer mittleren Rollschiene einer vorderen Rolle (17), die auf jedem vorderen Seitenrand des genannten zweiten Teils (13) montiert ist,
- Mittel (25, 26, 27, 28; 32; 40, 41, 42) zur Verschiebung der beweglichen Teile (12, 13) einerseits zwischen der ausgebreiteten Stellung, in der die beweglichen Teile (12, 13) aneinander gereiht sind und aneinanderstoßen, einer Zwischenstellung, in der die beweglichen Teile (12, 13) übereinander angeordnet sind, und der eingezogenen Stellung, in der die genannten beweglichen Teile (12, 13) mit dem feststehenden Teil (11) übereinander angeordnet sind, und andererseits zwischen der eingezogenen und der ausgebreiteten Stellung, und
- Mittel (50, 55, 60) zur Verriegelung und Entriegelung jedes beweglichen Teils (12, 13) in der ausgebreiteten Stellung.

2. Vorrichtung nach Patentanspruch 1, **dadurch gekennzeichnet, dass** die Verschiebungsmittel für das erste bewegliche Teil (12) einerseits Mittel zur Verschiebung dieses ersten Teils zwischen der ausgebreiteten und der eingezogenen Stellung umfassen und andererseits Mittel zur Verschiebung zwischen der eingezogenen und der ausgebreiteten Stellung des genannten ersten beweglichen Teils (12), wobei die genannten Mittel vom zweiten beweglichen Teil (13) getragen werden.

3. Vorrichtung nach Patentanspruch 1, **dadurch gekennzeichnet, dass** das genannte Mittel zur Führung des ersten beweglichen Teils (12) aus einer oberen Rollschiene (23) für zwei Rollen (14) besteht, die auf dem hinteren Seitenrand montiert sind bzw. auf dem vorderen Seitenrand des genannten ersten Teils.

4. Vorrichtung nach Patentanspruch 1 oder 4, **dadurch gekennzeichnet, dass** die Rollbahn (21), die mittlere Schiene (22) und die obere Schiene (23) von unten nach oben in einem Längsprofil (20) ausgearbeitet sind, das an jeder seitlichen Stütze des abdeckenden Teils (10) angebracht ist.

5. Vorrichtung nach irgendeinem der vorangehenden Patentansprüche, **dadurch gekennzeichnet, dass** sich die hinteren Enden (22a, 23a) der mittleren Schiene (22) und der oberen Schiene (23) im selben Abstand von der Rollbahn (21) befinden.

6. Vorrichtung nach Patentanspruch 1, **dadurch gekennzeichnet, dass** das Verbindungsstück (16) ein oberes Ende (16a) aufweist, das am vorderen Seitenrand des zweiten beweglichen Teils (13) befestigt ist, und ein unteres Ende (16b), das eine Achse (18) zur Montage der entsprechenden hinteren Rolle (15) trägt.

7. Vorrichtung nach irgendeinem der vorangehenden Patentansprüche, **dadurch gekennzeichnet, dass** die Stellung des hinteren Endes (21a) der Rollbahn (21) derart bestimmt wird, dass in der ausgebreiteten Stellung der genannten beweglichen Teile das obere Ende (16a) des Verbindungsstückes (16) und das zweite bewegliche Teil (13) mit dem ersten beweglichen Teil (12) ausgerichtet ist.

8. Vorrichtung nach irgendeinem der vorangehenden Patentansprüche, **dadurch gekennzeichnet, dass** die Mittel zur Verschiebung des zweiten Teils (13) aus zwei Gewindeseilen (25, 26) bestehen, deren eines Ende (25a, 26a) jeweils mit der Achse (18) zur Montage einer der hinteren Rollen (15) des zweiten beweglichen Teils (13) befestigt ist, wobei jedes Gewindeseil (25, 26) mit einem Zahnrad (27) in Eingriff steht, das durch einen Elektromotor (28) in Drehung versetzt wird.

9. Vorrichtung nach Patentanspruch 8, **dadurch gekennzeichnet, dass** jedes Gewindeseil (25, 26) durch die Drehung des Antriebszahnrades (27) in einer Hohlkehle (24) in Längsrichtung verschiebbar ist, die in jedem Profil (20) ausgebildet ist und sich an der entsprechenden Rollbahn (21) entlang erstreckt.

10. Vorrichtung nach irgendeinem der vorangehenden Patentansprüche, **dadurch gekennzeichnet, dass** das hintere Ende (22a) der mittleren Schiene (22) nach oben gerichtet ist und durch eine geneigte Ebene (30) in zwei Abschnitte (29a, 29b) geteilt ist, die zwischen einerseits einer ersten Stellung des Durchlaufs der vorderen Rolle (17) des zweiten beweglichen Teils (13) durch den ersten Abschnitt (29a) zum Einnehmen der ausgebreiteten Stellung durch dieses zweite bewegliche Teil (13) und andererseits einer zweiten Stellung des Durchlaufs dieser vorderen Rolle (17) durch den zweiten Abschnitt (29b) zur mittleren Schiene (22) bei der Bewegung des zweiten beweglichen Teils (13) in die eingezogene Stellung kippbar ist.

11. Vorrichtung nach Patentanspruch 10, **dadurch gekennzeichnet, dass** die geneigte Ebene (30) durch eine Torsionsfeder in der ersten Stellung gehalten wird, deren erstes Ende auf einer Kippachse befestigt ist, die mit der genannten geneigten Ebene (30) fest verbunden ist, und deren anderes Ende am entsprechenden Profil (20) befestigt ist.

12. Vorrichtung nach irgendeinem der vorangehenden Patentansprüche, **dadurch gekennzeichnet, dass** die Mittel zur Verschiebung des ersten beweglichen Teils (12) zwischen der ausgebreiteten und der eingezogenen Stellung aus einer Dichtung (32) bestehen, die auf dem hinteren Querrand des zweiten bewegiichen Teils (13) angebracht ist und einen herausragenden Teil (32a) aufweist, der einen Anschlag am hinteren Querrand des ersten beweglichen Teils (12) in der Stellung der genannten beweglichen Teile bildet, in der sie übereinander angeordnet sind.

13. Vorrichtung nach irgendeinem der vorangehenden Patentansprüche, **dadurch gekennzeichnet, dass** die Mittel zur Verschiebung des ersten beweglichen Teils (12) zwischen der eingezogenen und der ausgebreiteten Stellung einen kippbaren Haken (40) umfassen, der in einem Träger (41) montiert ist, der an jedem vorderen Seitenrand des zweiten beweglichen Teils (13) befestigt und dazu bestimmt ist, mit einem Einhakorgan (45) zusammenzuarbeiten, das an jedem hinteren Seitenrand des ersten beweglichen Teils (12) montiert ist und eine Kerbe (46) zum Verriegeln des Hakens (40) bei der Bewegung des ersten beweglichen Teils (12) durch das zweite bewegliche Teil (13) in die ausgebreitete Stellung aufweist.

14. Vorrichtung nach Patentanspruch 13, **dadurch gekennzeichnet, dass** der Haken (40) zwischen einer angehobenen Stellung zum Einhaken in die Verriegelungskerbe (46) und einer abgesenkten Stellung zum Gleiten unterhalb des Einhakorgans (45) gekippt werden kann.

15. Vorrichtung nach Patentanspruch 13 oder 14, **dadurch gekennzeichnet, dass** der Haken (40) durch eine Blattfeder (42) in der angehobenen Stellung gehalten wird.

16. Vorrichtung nach irgendeinem der vorangehenden Patentansprüche, **dadurch gekennzeichnet, dass** die Verriegelungs- und Entriegelungsmittel des ersten beweglichen Teils (12) für jede hintere Rolle (14) des genannten ersten Teils (12) eine Falle (50) umfassen, die durch Betätigungsorgane (60) zwischen einer ersten eingezogenen Stellung, die das hintere Ende (23a) der oberen Schiene (23) freigibt und einer zweiten Stellung, hinter der hinteren Rolle (14) in diese obere Schiene (23) ragend, um diese Rolle (14) im hinteren Ende (23a) zu blockieren, und einer dritten Stellung vor der hinteren Rolle (14), um sie zum vorderen Ende der genannten oberen Schiene (23) zurückzudrängen, gekippt wird.

17. Vorrichtung nach irgendeinem der Patentansprüche 1 bis 15, **dadurch gekennzeichnet, dass** die Verriegelungs- und Entriegelungsmittel des zweiten beweglichen Teils (13) für jede vordere Rolle (17) des genannten zweiten Teils (13) einen Haken (55) umfassen, der durch Betätigungsorgane (60) zwischen einer ersten eingezogenen Stellung, die den zweiten Abschnitt (29b) des hinteren Endes (22a) der oberen Schiene (22) freigibt und einer zweiten Stellung, in diesen zweiten Abschnitt (29b) ragend, um diese vordere Rolle (17) im genannten hinteren Ende (22a) zu blockieren, gekippt wird.

18. Vorrichtung nach Patentanspruch 16, **dadurch gekennzeichnet, dass** die Mittel (60) zur Betätigung des Kippens der Falle (50) und des Hakens (55) aus einem Elektromotor (61) bestehen, der eine Welle (62) in Drehung versetzt, der eine erste Schraube (63) trägt, die mit einem Antriebsritzel (65) der Falle (50) über mindestens zwei Zahnräder (67, 68) in Eingriff steht, und eine zweite Schraube (64), die mit einem Antriebsritzel (59) des Hakens (55) in Eingriff steht, wobei das Übersetzungsverhältnis zwischen einerseits dem Antrieb der Falle (50) und andererseits dem Antrieb des Hakens (55) derart festgelegt ist, dass eine größere Rotationsgeschwindigkeit der Falle (50), als der Rotationsgeschwindigkeit des Hakens (55) erhalten wird und das Antriebsverhältnis zwischen dem Haken (55) und der Falle (50), umgekehrt ist.

19. Vorrichtung nach irgendeinem der vorangehenden Patentansprüche, **dadurch gekennzeichnet, dass** das erste und das zweite bewegliche Teil (12, 13) einen Teil des Daches des Kraftfahrzeuges bilden.

20. Vorrichtung nach irgendeinem der Patentansprüche 1 bis 18, **dadurch gekennzeichnet, dass** das erste bewegliche Teil (12) einen Teil des Daches des Fahrzeugs bildet und das zweite bewegliche Teil (13) einen Teil einer Hecktür des genannten Kraftfahrzeuges bildet.

21. Kraftfahrzeug, **dadurch gekennzeichnet, dass** es mit einer Vorrichtung zur Betätigung der Verschiebung beweglicher Teile (12, 13) eines abdeckenden Teils (10) des Karosseriegehäuses (2) nach irgendeinem der Patentansprüche 1 bis 20 ausgestattet ist.
